# EUROPEAN PATENT APPLICATION

(11) **EP 2 854 087 A1**
(43) Date of publication of application: **01.04.2015**
(21) Application number: 14184138.7
(22) Date of filing: 09.09.2014
(51) Int. Cl.: G06Q 20/32, G06Q 20/34

(54) **Method for processing a payment**

(30) Priority: 11.09.2013 TW 102132767
(71) Applicant: Yang, Chien-Kang, Taipei City 10682 (TW)
(72) Inventor: Yang, Chien-Kang, Taipei City 10682 (TW)
(74) Representative: Zimmermann, Tankred Klaus

(57) **Abstract**

In a method for processing a payment, an electronic device (1) receives transaction information related to a transaction and to a payment for the transaction, accesses a payment card (22) via a portable payment device (2), cooperates with the payment card (22) to generate a payment command to include at least the transaction information, establishes a session with a banking server (5), and transmits the payment command to the banking server (5) under the session. The banking server (5) identifies validity of the payment card (22) based on the payment command, and processes the payment according to the transaction information afterward. The electronic device (1) then receives a payment result generated by the banking server (5) after completing the payment.

## Description

The invention relates to a method for processing a payment, more particularly to a method that employs a plug-and-play device for processing a payment.

Currently, payments for goods and/or services may be done using cash or plastic money cards (e.g. , a credit card, a debit card, etc.). In order to accept plastic money cards as a means for payment, a merchant must enter an agreement with a card issuer (e.g., a bank) and provide a processing equipment (e.g., a card reader capable of reading the payment card) for communicating with the card issuer. As a result, merchants operating with low revenue and/or profit margin may be discouraged to accept plastic money cards.

As for online transactions, an online payment using a credit card is generally executed on a personal computer or a mobile device (e.g., a smart phone). When executing the online payment, a user is first instructed to enter personal information via an interface (e.g., a webpage displayed on the personal computer) including a username and an associated password for verifying the identity of the user. After identity of the user is verified, the interface further instructs the user to enter credit card information, which may include a card number, an expiration date, etc. A conventional system for executing such payment may be seen disclosed in, for example, Taiwanese Patent No. 473681 and Taiwanese Patent Application Publication No. 200816099.

However, in cases where the computer and the mobile device are not available or are not functional (due to reasons such as no Internet connection or insufficient power), an online transaction may be unable to take place.

Therefore, the object of the present invention is to provide a method that is capable of addressing the drawbacks of the prior arts mentioned above.

Accordingly, a method of the present invention is for processing a payment. The method is to be implemented using an electronic device that is removably connected to a portable payment device and that communicates with a banking server. The portable payment device is a plug-and-play device and is provided with a payment card. The method comprises:
(a) receiving, by the electronic device, transaction information related to a transaction and to a payment for the transaction;
(b) accessing, by the electronic device, the payment card via the portable payment device;
(c) cooperating, by the electronic device, with the payment card to generate a payment command to include at least the transaction information;
(d) establishing, by the electronic device, a session with the banking server, the session providing a secure communication channel between the electronic device and the banking server;
(e) transmitting, by the electronic device, the payment command to the banking server under the session established in step (d), the banking server being configured to identify validity of the payment card based on the payment command in response to receipt of the payment command and to process the payment according to the transaction information included in the payment command after identifying the payment card as valid; and
(f) receiving, by the electronic device, a payment result from the banking server under the session established in step (d), the payment result being generated by the banking server after completing the payment.

Another object of the present invention is to provide a system that is configured to communicate with a banking server to perform the aforementioned method.

Accordingly, a system of the present invention includes an electronic device and a portable payment device.

The electronic device includes a processor, a memory unit that is coupled to the processor and that stores a transaction application therein, a first connecting interface that is coupled to the processor, and a communication unit that is coupled to the processor and that is configured to communicate with a banking server.

The portable payment device is a plug-and-play device, and is removably connected to the electronic device. The portable payment device includes a card slot that is provided with a card interface for containing a payment card therein, and a second connecting interface that is to be electrically connected to the first connecting interface of the electronic device, thereby enabling access of the payment card using the electronic device.

The transaction application, when executed by the processor, causes the electronic device to cooperate with the payment card and the banking server to execute the method of this invention.

Yet another object of the present invention is to provide an electronic device that is able to perform the method.

Accordingly, an electronic device of the present invention includes a processor, a memory unit that is coupled to the processor and that stores a transaction application therein, a first connecting interface that is coupled to the processor and that is for removably coupling to a portable payment device provided with a payment card, and a communication unit that is coupled to the processor and that is configured to communicate with a banking server.

The transaction application, when executed by the processor, causes the electronic device to cooperate with the payment card and the banking server to execute the method of this invention.

Still another object of the present invention is to provide a payment card that is configured to use various securing mechanisms for managing data from different sources.

Accordingly, a payment card of the present invention is to be coupled to an electronic device that executes an application to perform a personalization process for the payment card. The payment card includes a control module and a storage unit.

The control module includes a controller chip, a controller firmware and an application program interface (API).

The storage unit includes a hidden area that is only accessible to the application via the controller firmware and the API after a certain authorization sequence has been done.

The hidden area is partitioned into a plurality of hidden data blocks. Each of the hidden data blocks is associated with a storage security level and is configured for storing a predetermined data type of personalization data.

For each of the hidden data blocks, the controller chip is configured to perform the personalization process for storing the personalization data with a predetermined one of a plurality of securing mechanisms that corresponds to the storage security level of the hidden data block.

Other features and advantages of the present invention will become apparent in the following detailed description of the preferred embodiment with reference to the accompanying drawings, of which:
Figure 1 is a block diagram of a preferred embodiment of a system according to the invention;
Figure 2 is a schematic diagram of an interface device being configured to communicate with various electronic devices in the system of Figure 1;
Figures 3A to 3C are flow charts illustrating steps of a method for processing a payment using the system of Figure 1;
Figures 4 to 7 illustrate various messages outputted by an input/output unit of the electronic device in different stages of the method;
Figure 8 is a block diagram of the memory unit of a payment card according to the invention;
Figure 9 is a flow chart of a personalization process for the payment card according to the invention;
Figure 10 is a flow chart of the personalization process implemented using a first securing mechanism;
Figure 11 is a flow chart of the personalization process implemented using a second securing mechanism;
Figure 12 is a flow chart illustrating a bank server cooperating with a platform server and a cooperating organization server to generate information for implementing the personalization process using a third securing mechanism;
Figures 13A and 13B are flow charts of the personalization process implemented using the third securing mechanism; and
Figure 14 is a flow chart of the personalization process implemented using a fourth securing mechanism.

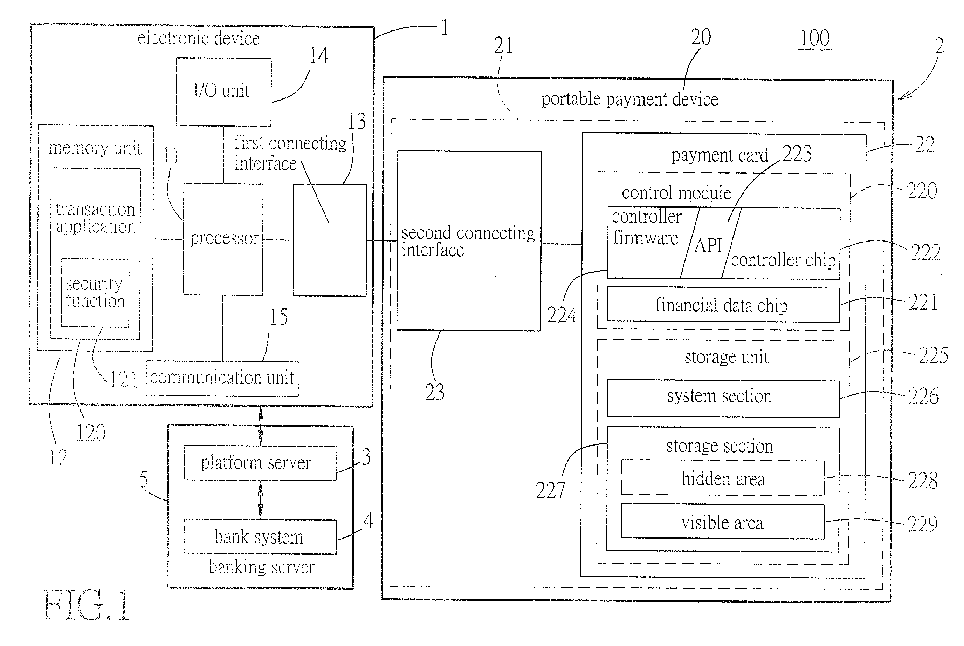

As shown in Figure 1, the preferred embodiment of a system 100 according to the present invention is for implementing a method for processing a payment that is related to a transaction. The system 100 includes an electronic device 1 that is able to communicate with a banking server 5, and a portable payment device 2 that is provided with a payment card 22, that is to be removably connected to the electronic device 1, and that serves as an interface device for coupling the payment card 22 to the electronic device 1.

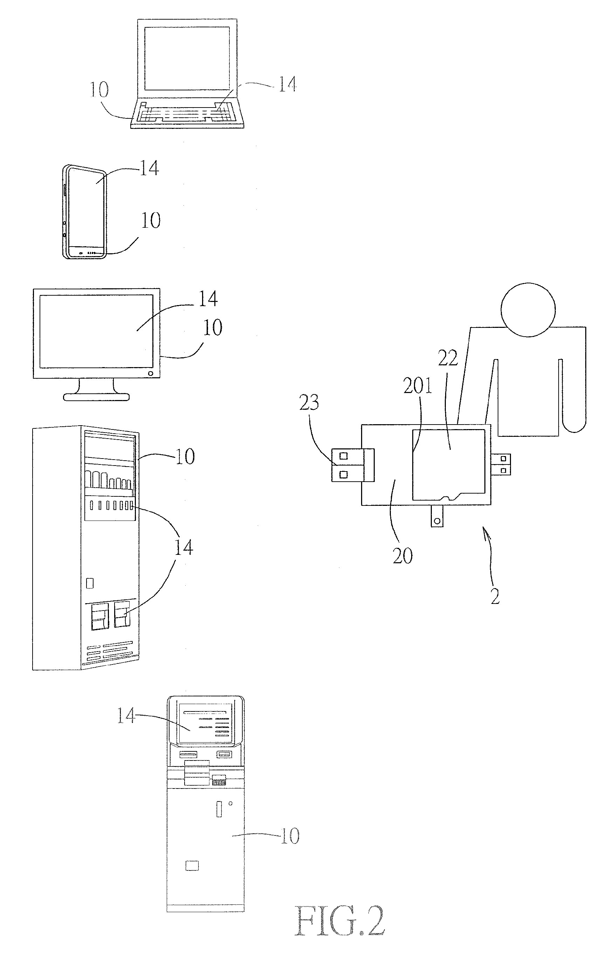

In this embodiment, the electronic device 1 may be embodied using one of a personal computer, a laptop computer, a tablet computer, a mobile device, an automated teller machine (ATM), and a vending machine (See Figure 2). It is noted that the personal computer, the laptop computer, the tablet computer and the mobile device may be in either a customer or a merchant's possession. The electronic device 1 has to include network connectivity and mechanism for executing an application designed for causing the electronic device 1 to perform the method for processing the payment.

The electronic device 1 is operable to communicate, over a network, with a banking server 5. The banking server 5 may be operated by a master bank that issues payment cards to customers, or a member bank. In this embodiment, the banking server 5 includes a platform server 3 for communicating with the electronic device, and a bank system 4 that is coupled to the platform server 3. In various embodiments, the platform server 3 and the bank system 4 may be integrated as a single component (e.g., a server) or may be implemented as two separate components that communicate over a dedicated channel or session. In cases that the platform server 3 and the bank system 4 are implemented as separate components, the platform server 3 may be operated by a third party other then the bank.

The electronic device 1 includes a processor 11, a memory unit 12 that is coupled to the processor 11 and that stores a transaction application 120 therein, a first connecting interface 13 that is coupled to the processor 11, an input/output (I/O) unit 14 that is coupled to the processor 11, and a communication unit 15 that is coupled to the processor 11.

In this embodiment, the first connector 13 may be embodied using a universal serial bus (USB) 2.0, USB 3. 0,MiniUSB or MicroUSB port. The I/O unit 14 may include, but is not limited to, a mouse/keyboard combination, a touch screen, a speaker/display combination, or a combination thereof. In cases that the electronic device 1 is embodied using a vending machine, the I/O unit 14 may include a plurality of physical/virtual buttons, a control panel, an item dispenser, or a combination thereof. In cases that the electronic device 1 is embodied using an automated teller machine (ATM), the I/O unit 14 may include a touch screen, a keyboard, and a cash dispensing equipment.

The portable payment device 2 is embodied using a plug-and-play device (e.g., a device having universal serial bus (USB) 2.0, USB 3.0, MiniUSB or MicroUSB connectivity). The portable payment device 2 is removably connected to the electronic device 1 for performing the method for processing the payment.

The portable payment device 2 may be adequately dimensioned to be fit into pockets or purses, and/or to be attached to other objects, such as the purse or a portable device, as an accessory item. The portable payment device 2 includes a housing 20 formed with a card slot 201, a circuit board 21 disposed in the housing 20, and a second connecting interface 23 disposed on the circuit board 21 and configured to be electrically connected to the first connecting interface 13 of the electronic device 1. The card slot 201 is provided with a card interface for containing the payment card 22 therein. The card interface provides a communication interface between the payment card 22 and the second connecting interface 23, and as a result, when the portable payment device 2 is coupled to the electronic device 1, access to the payment card 22 is enabled using the electronic device 1. It is noted that the portable payment device 2 is not provided with computing functionality when the payment card 22 is not connected with the portable payment device 2.

In this embodiment, the payment card 22 is embodied using a micro Secure Digital (SD) card. The payment card 22 includes a control module 220, a financial data chip 221 and a storage unit 225. The financial data chip 221 (see Figure 1) compiles with the FISC II specification.

The control module 220 includes a controller chip 222, controller firmware 224 that is loaded in a read-only memory (ROM) (not shown in the drawings), and an application program interface (API) 223. The controller chip 222 and the ROM may be integrated using integrated circuit packaging, and may be juxtaposed with the storage unit 225.

When the portable payment device 2 is coupled to the electronic device 1, the processor 11 is operable to access the financial data chip 221 and the storage unit 225 through the controller firmware 224. The API 223 and the controller firmware 224 are able to operate according to the instructions of the transaction application 120. The API 223 includes functions that are able to perform encryptions using algorithms such as Triple Data Encryption Algorithm symmetric-key block cipher (3DES), Advanced Encryption Standard (AES), RSA encryption, etc.

The storage unit 225 includes a system section 226 and a storage section 227. The system section 226 is built in with basic operation information. The storage section 227 includes a hidden area 228 and a visible area 229. The visible area 229 allows access by an operating system (OS) of the electronic device 1. For example, for a Microsoft Windows@ system, the visible area 229 may be accessed using a File Management program.

The hidden area 228 is not accessible to the OS, and it is not allowed to perform operations such as read, write or modify content of files stored in the hidden area 228 via the OS. Instead, the hidden area 228 is only accessible to the transaction application 120 via the controller firmware 224 after a certain authorization sequence has been done. Specifically, when the portable payment device 2 is coupled to the electronic device 1, the controller firmware 224 is configured to report to the OS that only the visible area 229 is detected. As a result, the OS will not display the hidden area 228 to a user. The hidden area 228 is accessible only when the user executes the transaction application 120, and passes the authorization sequence. Since details regarding the authorization sequence may be readily appreciated by those skilled in the art, they will not be discussed herein for the sake of brevity.

The hidden area 228 stores a virtual account that is associated with a bank account that is between a user of the portable payment device 2 and the bank that operates the banking server 5. Data regarding the bank account is stored in the financial data chip 221. In practice, the hidden area 228 may store a plurality of virtual accounts respectively associated with a plurality of bank accounts.

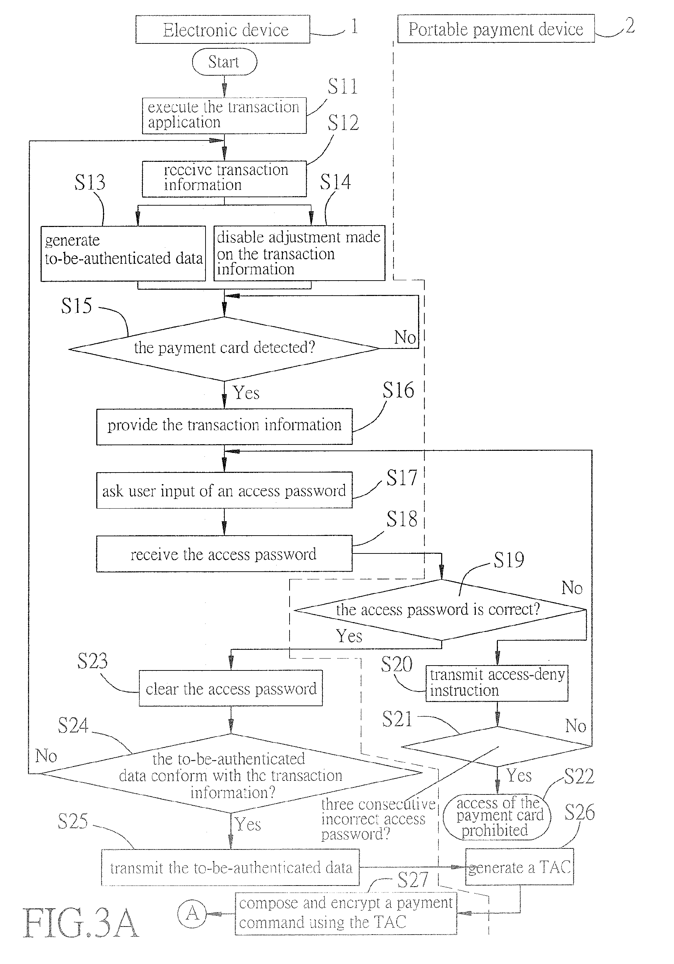

Further referring to Figure 3A, an embodiment the method for processing the payment will now be described. In the following example, the electronic device 1 may be embodied using a computer, and the transaction is purchase of a Taiwan High Speed Rail ticket.

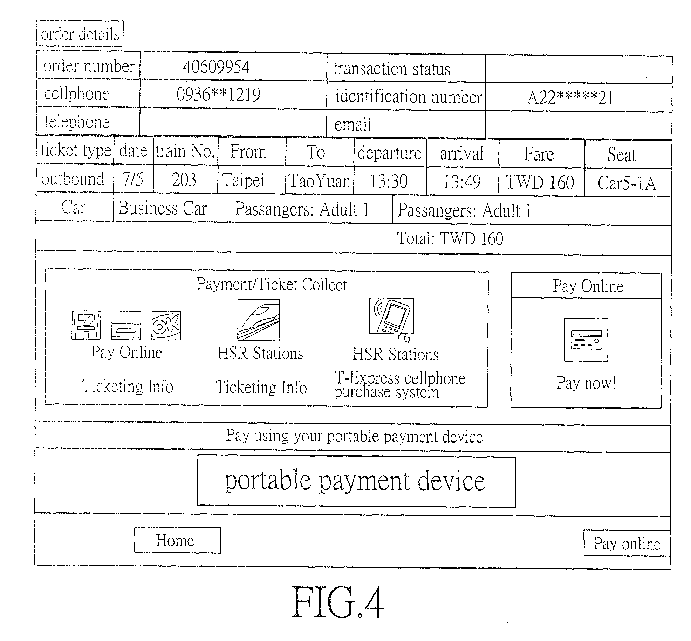

To begin with, a user may operate the electronic device 1 to connect to a website that handles the ticket purchase (see Figure 4). The website provides the user with an interface for inputting transaction information related to the transaction and to the payment for the transaction. Here, the transaction information includes details regarding the trip (e.g., information related to the user, departure time, place of departure, destination, train fare, etc.).

After the transaction information is provided by the user, the website provides a number of ways for the user to make the payment (e.g. , paying in a convenience store or a railway station, using a conventional credit card or the payment card 22). Here, in this case, the user selects to make the payment using the payment card 22. In response, the processor 11 of the electronic device 1 is operable to execute the transaction application 120 (step S11).

In step 12, the processor 11 receives the transaction information. Afterward, the processor 11 executes a security function 121 included in the transaction application 120 to generate to-be-authenticated data in step S13, and to disable adjustment made on the transaction information in step S14. Specifically, the to-be-authenticated data includes the transaction information, and after step S14, it is not allowed for the user to make any change to the transaction information. It should be noted that steps S13 and S14 may be performed in any order, or performed simultaneously.

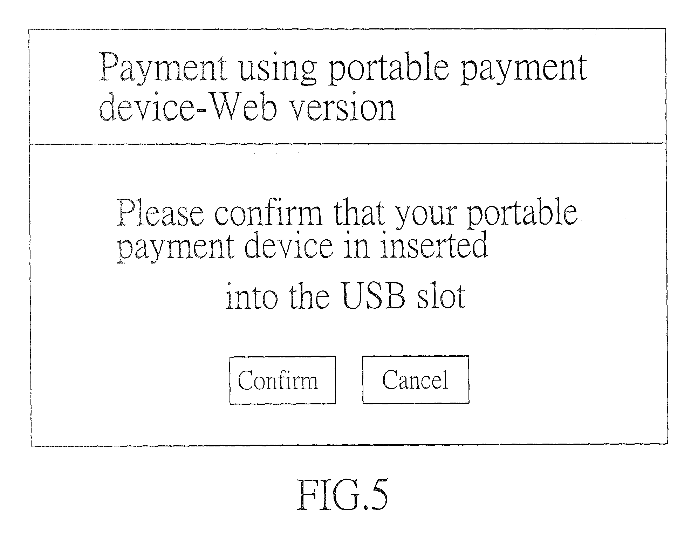

Then, the processor 11 generates an instruction for the user to connect the portable payment device 2 (provided with the payment card 22) to the electronic device 1 (see Figure 5) . When the processor 11 detects, in step S15, the payment card 22 through the portable payment device 2, the flow proceeds to step S16. Otherwise, the processor 11 idles until the portable payment device 2 is connected.

In step S16, the processor 11 outputs, via the I/O unit 14, the transaction information again for the user to confirm, and provides a list of virtual accounts stored in the payment card 22 for the user to select from. Specifically, the payment card 22 initially stores a master virtual account associated with master bank, and may store additional member virtual accounts that are associated with various member banks.

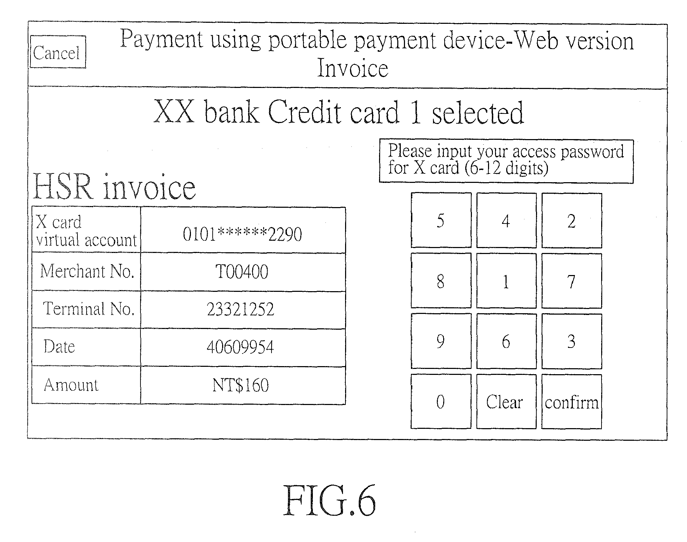

After one of the virtual accounts is selected, in step S17, the processor 11 outputs an instruction that prompts user input of an access password associated with the payment card 22 (see Figure 6).

Upon receipt of the access password (step S18), the processor 11 subsequently transmits the access password to the payment card 22 through the first connecting interface 13 and the second connecting interface 23. The payment card 22 is operable to verify the access password in step S19. When it is verified by the payment card 22 that the access password is correct, the payment card 22 transmits an access-grant instruction to the electronic device 1, and the flow proceeds to step S23. Otherwise, the flow proceeds to step S20, in which the payment card 22 transmits an access-deny instruction to the electronic device 1, and in step S21, the payment card 22 counts a number of consecutive occasions that a wrong access password is received. When the number is smaller than a threshold (for example, three), the flow goes back to step S17 for allowing the user to enter another access password. Otherwise, the flow proceeds to step S22, in which the payment card 22 is locked and access to the payment card 22 is prohibited.

In step S23, the electronic device 1 clears the access password that is temporarily stored therein (received in step S18). This step is implemented to prevent the access password from being retrieved by other parties. This is even more important in the cases where a public electronic device, or an electronic device in the merchant's possession, is used for performing the method.

In step S24, the processor 11 is operable to compare the to-be-authenticated data generated in step S13 and the transaction information confirmed by the user in step S16. When it is determined that the to-be-authenticated data conforms with the transaction information, the flow proceeds to step S25. Otherwise, the flow goes back to step S12.

In step S25, the processor 11 transmits the to-be-authenticated data to the payment card 22. Then, in step S26, the payment card 22 is configured to generate a transaction authentication code (TAC) based on the to-be-authenticated data and a secret key, and to transmit the TAC to the electronic device 1.

Specifically, the payment card 22 stores, in the financial data chip 221, a master secret key corresponding to the master virtual account. The payment card 22 may store, in the hidden area 228, additional member secret keys corresponding to the member virtual accounts. As such, the payment card 22 selects a corresponding one of the secret keys (including the master secret key and the member secret keys) based on the virtual account selected in step S16 for generating the TAC.

In step S27, the processor 11 executing the transaction software 120 composes a payment command using the TAC. The payment command includes at least the transaction information and the TAC, and is encrypted.

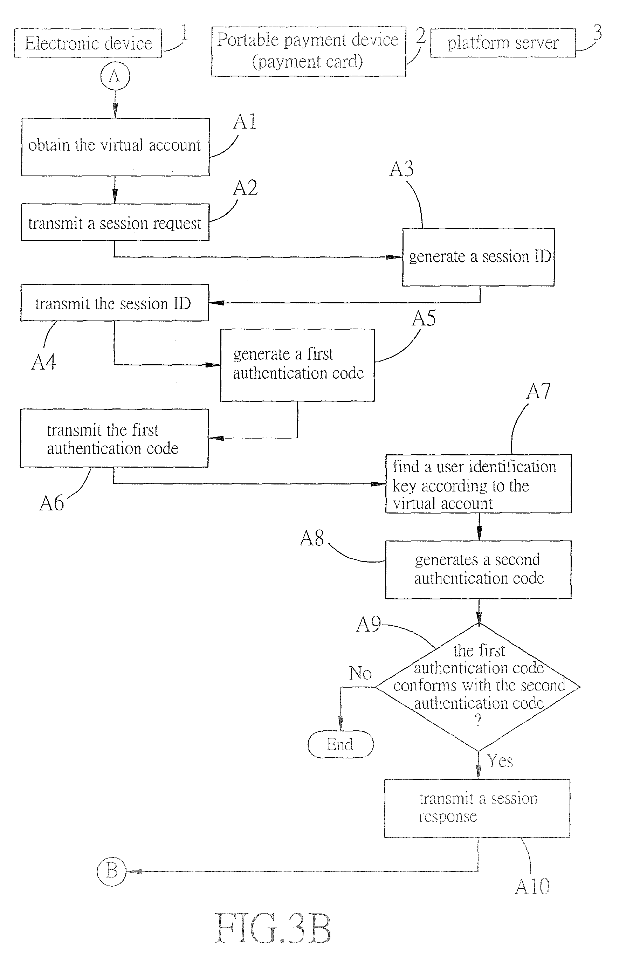

Referring to Figure 3B, after step S27, the electronic device 1 attempts to establish a session with the platform server 3. The session is for providing a secure communication channel between the electronic device 1 and the platform server 3, and for identifying validity of the payment card 22.

In step A1, the processor 11 executing the transaction application 120 obtains the virtual account used in step S16 from the payment card 22. It is noted in that in other embodiments, various codes or symbols that are able to identify the user of the portable payment device 2 may be employed.

In step A2, the processor 11 transmits a session request to the platform server 3. The session request includes the virtual account.

In step A3, the platform server 3 generates a session identification (ID) in response to receipt of the session request, and transmits the session ID to the electronic device 1. The electronic device 1 in turn receives the session ID and transmits the same to the payment card 22 in step A4.

In step A5, the payment card 22 is operable to generate a first authentication code based on the session ID and a card identification key that is stored in the hidden area 228 during physical production of the payment card 22. Then, the payment card 22 transmits the first authentication code to the electronic device 1.

It is noted that the card identification key is only known to the payment card 22 and the platform server 3, and is not transmitted to the electronic device 1 throughout the method. Furthermore, generation of the first authentication code is done within the payment card 22. This ensures that the electronic device 1 is not able to intervene in the generation of the first authentication code, and would not be able to generate a valid first authentication code without the card identification key. Therefore, only a valid payment card 22 is able to generate a valid first authentication code .

The electronic device 1 in turn transmits the first authentication code to the platform server 3 in step A6.

Then, in step A7 the platform server 3 finds a user identification key stored therein, according to the virtual account included in the session request that is received from the electronic device 1 in step A2. The user identification key corresponds to the card identification key, and is dedicated to the virtual account.

In step A8, the platform server 3 generates a second authentication code based on the session ID generated in step A3 and the user identification key found in step A7.

In step A9, the platform server 3 determines whether the first authentication code received from the electronic device 1 in step A6 conforms with the second authentication code generated in step A8. When it is determined that the first authentication code conforms with the second authentication code (that is, the payment card 22 is one issued by the bank), the flow proceeds to step A10. Otherwise, the platform server 3 determines that the payment card 22 failed to generate a valid first authentication code (and therefore may not be one issued by the bank), and the flow is terminated.

In step A10, the platform server 3 transmits a session response to the electronic device 1 so as to establish the session and to allow the transaction to proceed.

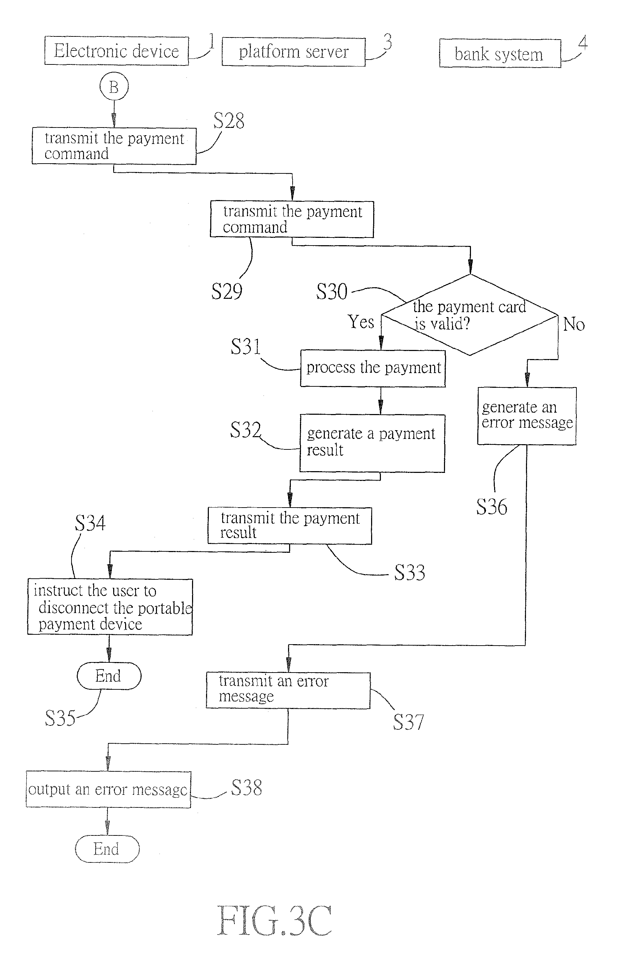

Referring to Figure 3C, after the platform server 3 allows the transaction to proceed, in step S28, the payment command composed in step S27 is transmitted by the processor 11, via the communication unit 15, to the platform server 3 under the session. Specifically, the transmission is executed using Secured Sockets Layer (SSL) protocol. The platform server 3 in turn transmits the payment command to the bank system 4 in step S29 through the dedicated channel.

In response to receipt of the payment command, in step S30, the bank system 4 is operable to decrypt the received payment command, and to identify validity of the payment card 22 based on the payment command. Specifically, the bank system 4 generates a confirmation code using the to-be-authenticated data included in the payment command, using the same secret key stored in the payment card 22 (e.g., in the financial data chip 221 or the hidden area 228). In some embodiments, the secret key for generating the confirmation code may be included in the payment command, and transmitted by the platform server 3 to the bank system 4.

The bank system 4 then compares the TAC and the confirmation code. When it is determined that the confirmation code conforms with the TAC, the bank system 4 determines that the payment card 22 is valid, and the transaction information was not altered during transmission. The flow then proceeds to step 531. Otherwise, the flow proceeds to step S36.

In step S31, the bank system 4 is configured to process the payment according to the transaction information included in the payment command. In this case, a value of the train fare (in this case, NT$160) is deducted from the bank account that is represented by the virtual account, and is transferred to an account owned by the Taiwan High Speed Rail company.

Then, in step S32, the bank system 4 generates a payment result indicating that the transaction has been processed, and transmits the payment result to the platform server 3.

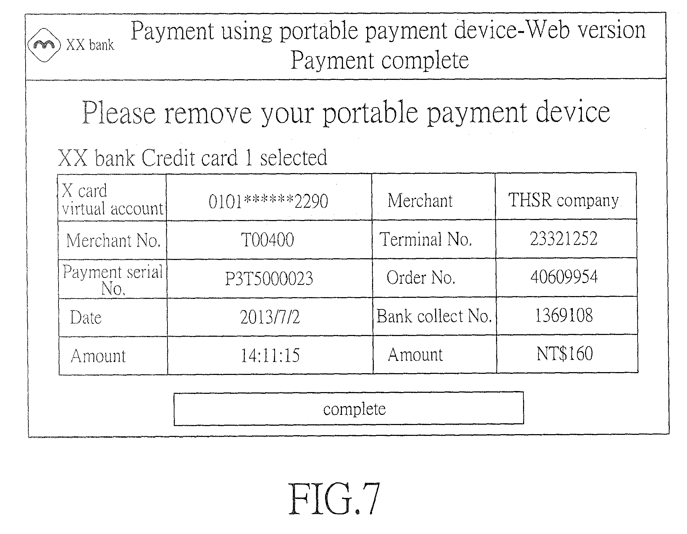

In turn, the payment result is relayed to the electronic device 1 in step S33. The transmission of the payment result is similarly under the session and uses the SSL protocol. Afterward, in step S34, the electronic device 1 may output an alert to instruct the user to disconnect the portable payment device 2 (see Figure 7).

The payment result may include a credential that is provided to the user in step S35. The credential may be in the form of a quick response (QR) code or a string of codes for the user to use in a convenience store or a station to redeem a physical train ticket, or in the form of an electronic train ticket that can be directly used in a station when downloaded to a mobile device.

In step S30, when it is determined that the confirmation code does not conform with the TAC, the bank system 4 determines that either the payment card 22 is invalid, or the transaction information was altered during transmission. As a result, in step S36, the bank system 4 generates and transmits an error message to the platform server 3. In step S37, the platform server 3 relays the error message to the electronic device 1, which outputs the error message in step S38. As a result, the transaction will not be processed.

The above-described method may be adopted in places such as a retail store. In such cases, when a customer is to purchase goods and/or services, a merchant may operate the electronic device 1 (e.g., a personal computer) to execute the transaction application 120 (step S11). In step S12, the transaction information may be inputted to the electronic device 1 by, for example, scanning a barcode associated with the goods and/or services. Then, the customer provides the merchant with the portable payment device 2 having the payment card 22 in step S15, confirms the transaction information in step S16, and provides the electronic device 1 with the access password in step S17.

The electronic device 1 will automatically carry out the subsequent steps with the platform server 3 and the bank system 4. Afterwards, in step S34, the payment is processed, and the customer may retrieve the portable payment device 2 and obtain the goods/services.

For example, the method is applicable in cases where the goods/services are provided to the customer via delivery, and the payment is made after the goods/services have been delivered. A delivery personnel may bring along an electronic device 1 having the first connecting interface 13 and installed with the transaction application 120, and after the customer confirms the goods/services, operate the electronic device 1 to perform the method. As a result, the delivery personnel is not required to bring cash during the trip.

The method is also applicable in cases where the goods/services are provided to the customer by a vending machine. After the payment is carried out in step S35, the vending machine provides the goods.

Further, the portable payment device 2 may be configured to be used with an ATM machine for withdrawing cash from the bank account. In such cases, after the method is carried out, the ATM dispenses the cash to the customer.

In some embodiments, the payment card 22 may be configured to store additional data (e.g., medical and health information, license or identification information, membership, etc.) in the storage unit 225. The additional data may be stored in the storage unit 225 by the electronic device 1 executing the application 120, which is further enabled to perform a personalization process (referred to as a "perso process").

It is assumed that in the perso process, the data that is to be stored in the payment card 22 needs to be handled using various security levels (for example, account information of a bank may require a higher security level than other general information). Accordingly, the payment card 22 of the present invention is further configured to provide a more secure and adaptive data management.

In some embodiments, the hidden area 228 of the payment card 22 may be partitioned into a plurality of hidden data blocks. Each of the hidden data blocks is associated with a storage security level and is configured for storing a predetermined data type of personalization data. Accordingly, for each of the hidden data blocks, the controller chip 222 is configured to perform the perso process for storing the personalization data with a predetermined one of a plurality of securing mechanisms that corresponds to the storage security level.

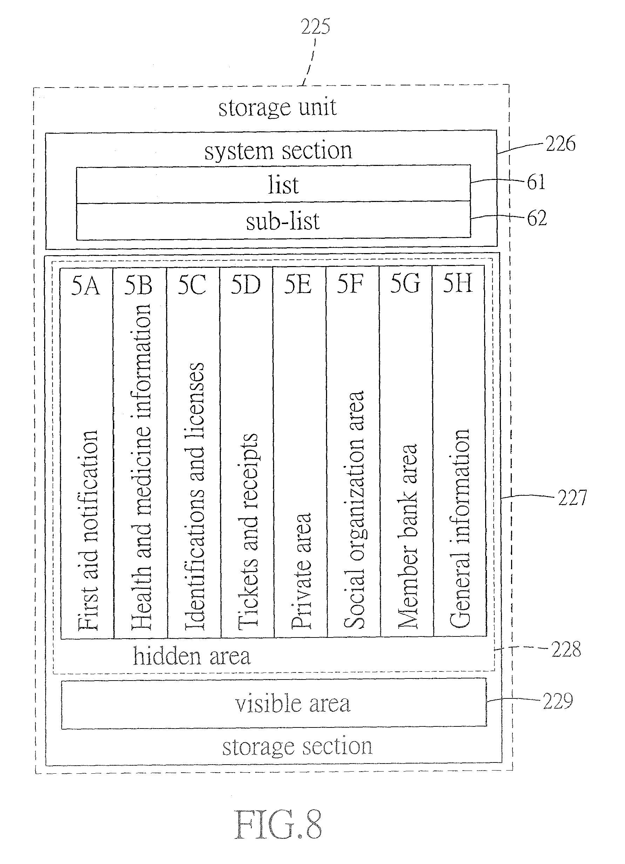

In the example shown in Figure 8, the hidden area 228 of the payment card 22 is partitioned into eight hidden data blocks (5A-5H) for the incoming data. Specifically, the hidden data block 5A is for storing first aid information regarding a user of the payment card 22, such as emergency contact (s) of the user, major disease history, allergies to medication, etc.

The hidden data block 5B is for storing basic health and medicine information regarding the user, such as physical examination and blood test result, electronic medical record (EMR) of the user, etc.

The hidden data block 5C is for storing electronic identity documents and licenses held by the user and/or relatives, such as an identity card, passport, driver's license, etc.

The hidden data block 5D is for storing electronic tickets and receipts, such as a prepaid train ticket or ticket for events and electronic invoice. The hidden data block 5E is for storing the user's private data.

The hidden data block 5F is for storing the user's registration data in various social organizations. The hidden data block 5G is for storing the user's account information in various banks. The hidden data block 5H is for storing other information.

For example, four different securing mechanisms are provided to implement the perso process for different storage security levels. Moreover, a party may have clearance to access some of the hidden data blocks based on its security level.

In different securing mechanisms, the payment card 22 may be required to establish communications with various third parties for obtaining authorization for implementing the personalization process.

Specifically, in each of the securing mechanisms, the payment card 22 is required to communicate with the platform server 3, which stores at least parts of authorization information for authorizing the perso process, and/or the personalization data.

In some of the securing mechanisms, the payment card 22 is further required to communicate with other third parties, such as an authorized organization server 32, a cooperating organization server 33, or the bank system 4, for obtaining other parts of the authorization information.

The authorized organization server 32 maybe operated by a third party that is authorized by the platform server 3 to provide information related to the perso process. The cooperating organization server 33 is operated by a third party that cooperates with the platform server 3 to generate the information related to the perso process.

In some of the securing mechanisms, user-input of the personalization data is allowed (i.e., the personalization data may be received from the application 120 via the controller firmware 224 and the API 223), while in other securing mechanisms, the personalization data is received from the third party and cannot be modified by the user.

For example, in the example shown in Figure 8, for the hidden data block 5A, the personalization data may be inputted/modified by the user, and access thereto may be allowed to everyone. For the hidden data blocks 5C-5E, the personalization data may be inputted/modified by the user, and is only accessible by the user. For the hidden data blocks 5B, 5F and 5G, the personalization data is received from the third party (i.e., the user may not modify the data), and is only accessible by the user. For the hidden data block 5H, the personalization data is received from the third party, and access thereto may be allowed to everyone.

In this embodiment, each of the hidden data blocks (5A-5H) is further partitioned into a plurality of hidden data sub-blocks for storing the personalization data (for example, each of the hidden data sub-blocks under the hidden data block 5G stores registered data and account information of one particular bank) . It is noted that all hidden data sub-blocks under a particular hidden data block are associated with an identical security level, and employ an identical securing mechanism.

It is noted that in other embodiments, additional hidden data blocks may be further partitioned, and the existing hidden data blocks may be used for storing various other information. Additional securing mechanisms may be provided as well.

In use, the system section 226 of the payment card 22 may maintain a list 61 of the hidden data blocks, and a sub-list 62 of the hidden data sub-blocks under each of the hidden data blocks 5A-5H. For each of the hidden data sub-blocks, a specific perso process is implemented to store the personalization data into the hidden data sub-block.

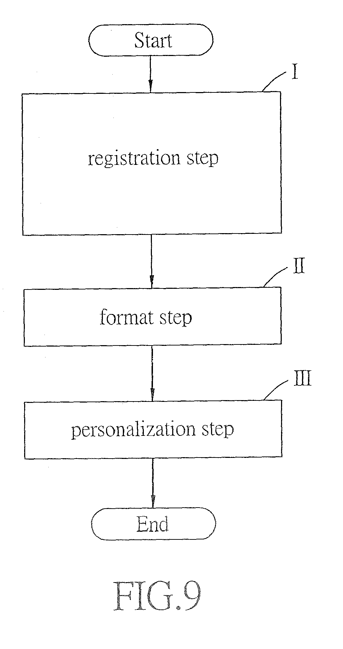

Referring to Figure 9, the perso process includes a registration step, a format step, and a personalization step.

In the registration step, the payment card 22 designates one of the hidden data blocks 5A-5H, and allocates one of the hidden data sub-blocks that is to be used for storing the personalization data.

In the format step, the designated one of the hidden data blocks 5A-5H is formatted to conform with the predetermined data type so as to allow the personalization data to be stored therein.

In the personalization step, the payment card 22 stores the personalization data in the designated one of the hidden data blocks (5A-5H).

In this embodiment, each of the hidden data sub-blocks is stored with a preset registration ID/password combination for authorizing the registration step and a preset format ID/password combination for authorizing the format step.

Before executing the registration step of the perso process, the payment card 22 receives a registration authorizing ID/password combination, and executes the registration step only when the registration authorizing ID/password combination conforms with the preset registrationID/password combination. Similarly, before executing the format step of the perso process, the payment card 22 receives a format authorizing ID/password combination, and executes the format step only when the format authorizing ID/password combination conforms with the preset formatID/password combination.

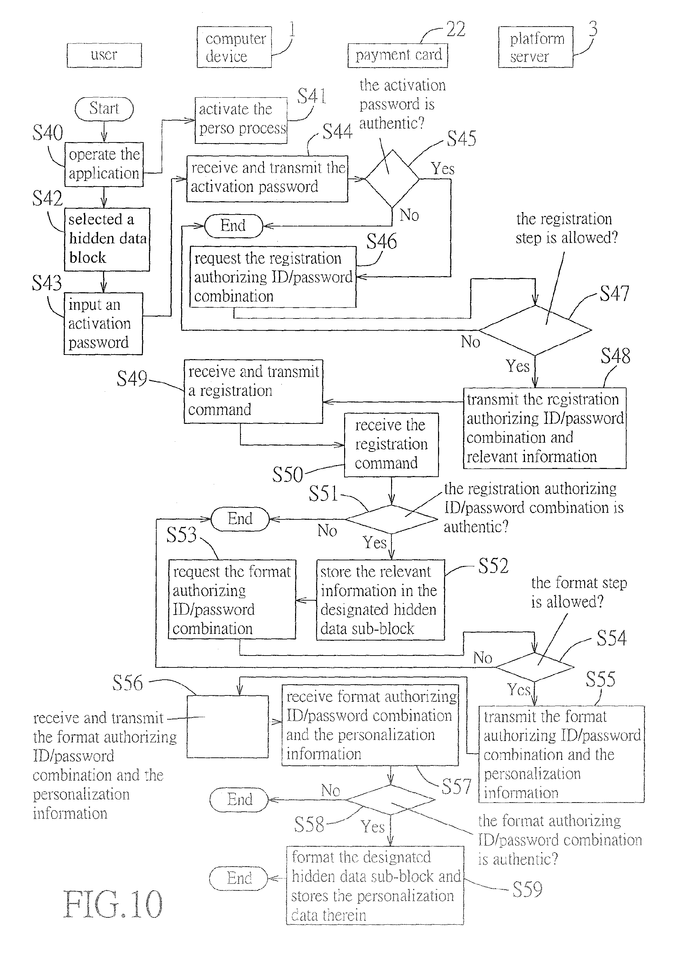

Further referring to Figures 1 and 10, the perso process implemented with a first securing mechanism will now be described in detail.

In step S40, a user operates the application 120 on the computer device 1, which in response activates the perso process in step S41. In step S42, the user selects one of the hidden data blocks (5A-5H) and one of the hidden data sub-blocks of the selected one of the hidden data blocks (5A-5H) according to the type of data that is to be stored into the payment card 22. In response to the selection, the payment card 22 designates the selected one of the hidden data blocks (5A-5H), and the selected one of the hidden data sub-blocks. For example, one of the hidden data sub-blocks in the hidden data block (5H) is designated to be subjected to the perso process.

In step S43, the user is instructed to input an activation password. The computer device 1 that receives the activation password then transmits the activation password to the payment card 22 in step S44. The payment card 22 determines whether the activation password is authentic in step S45. When it is determined that the activation password is authentic, the flow proceeds to step S46. Otherwise, the process is terminated.

In step S46, the computer device 1 communicates with the platform server 3 to request the registration authorizing ID/password combination corresponding to the designated hidden data sub-block. The platform server 3 determines whether the payment card 22 is allowed, for example by the third party associated with the hidden data block (5H), for the registration step in step S47. When it is determined that the payment card 22 is allowed for the registration step, the flow proceeds to step S48. Otherwise, the process is terminated.

In step S48, the platform server 3 transmits the registration authorizing ID/password combination and other relevant information corresponding to the designated hidden data sub-block to the computer device 1. The computer device 1 then uses the registration authorizing ID/password combination to transmit a registration command to the payment card 22 in step S49.

Upon receipt of the registration command in step 50, the payment card 22 determines whether the registration authorizing ID/password combination is authentic by comparing the received registration authorizing ID/password combination with the preset registration authorizing ID/password combination in step S51. When it is determined that the registration authorizing ID/password combination conforms to the preset registration authorizing ID/password combination, the flow proceeds to step S52. Otherwise, the process is terminated.

In step S52, the payment card 22 physically allocates the designated hidden data sub-block within the hidden data block 5H, and stores the relevant information in the designated hidden data sub-block. Specifically, the controller firmware 224 transmits the relevant information to the controller chip 222, which identifies the physical addresses of the designated hidden data sub-block via the list 61, and writes the relevant information into the identified physical addresses, thus completing the registration step.

The process then proceeds to the format step. In step S53, the computer device 1 communicates with the platform server 3 to request the format authorizing ID/password combination corresponding to the designated hidden data sub-block. The platform server 3 determines whether the payment card 22 is allowed for the format step in step S54. When it is determined that the payment card 22 is allowed, for example by the third party associated with the hidden data block (5H), for the format step, the flow proceeds to step S55. Otherwise, the process is terminated.

In step S55, the platform server 3 transmits the format authorizing ID/password combination and the personalization information corresponding to the designated hidden data sub-block to the computer device 1, which then uses the format authorizing ID/password combination to transmit a command to the payment card 22 in step S56.

In response, the payment card 22 receives the format authorizing ID/password combination from the computer device 1 in step S57, and then, determines whether the format authorizing ID/password combination is authentic by comparing the received format authorizing ID/password combination with the preset format ID/password combination in step S58. When it is determined that the format authorizing ID/password combination conforms to the preset format ID/password combination, the flow proceeds to step S59. Otherwise, the process is terminated.

In step S59, the payment card 22 formats the designated hidden data sub-block and stores the personalization data in the designated hidden data sub-block.

In this embodiment, the list 61 is also updated to reflect the perso process.

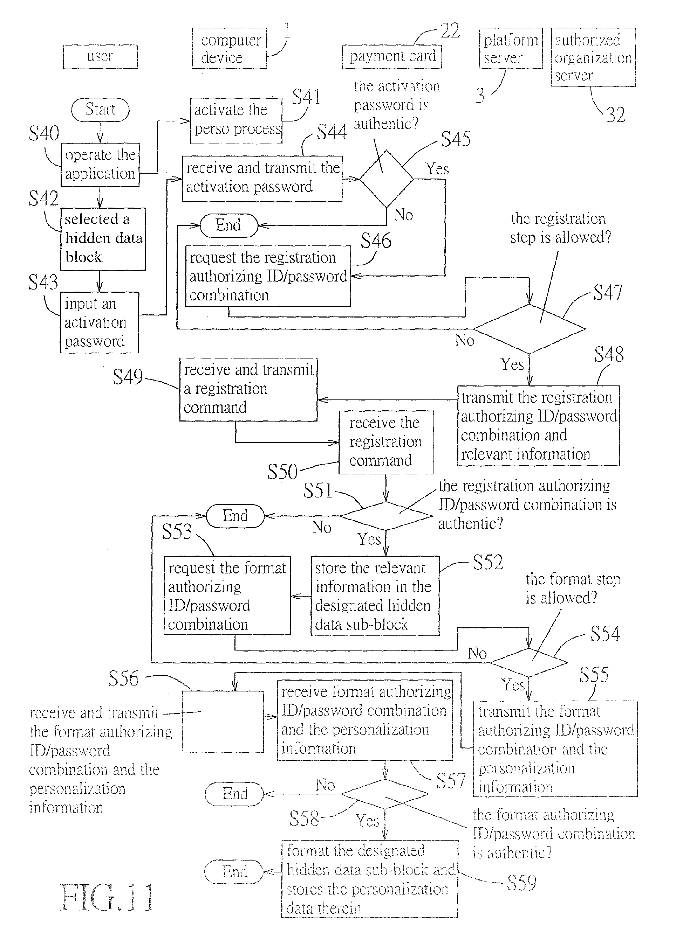

Figure 11 illustrates steps of the perso process using a second securing mechanism. In the example as shown in Figure 11, the user may intend to input his/her membership information of a club named "X1" into the payment card 22, and accordingly, one of the hidden data sub-blocks in the hidden data block 5F will be subjected to the personalization process.

In this example, since the registration step (i.e., steps S41 to S52) is executed in a manner similar to that using the first securing mechanism, details thereof are omitted herein for the sake of brevity.

The main differences between using the first securing mechanism and the second securing mechanism are described as follows. In step 53, the computer device 1 communicates with the authorized organization server 32 (which, in this case, is a server operated by the club X1) to request the format authorizing ID/password combination corresponding to the designated hidden data sub-block. The authorized organization server 32 instead of the platform server 3 determines whether the payment card 22 is allowed for the format step in step S54.

Additionally, since the personalization data in this case is not intended to be made public for anyone to access, the designated hidden data sub-block may be further assigned with an access ID/password combination to block unauthorized access attempt.

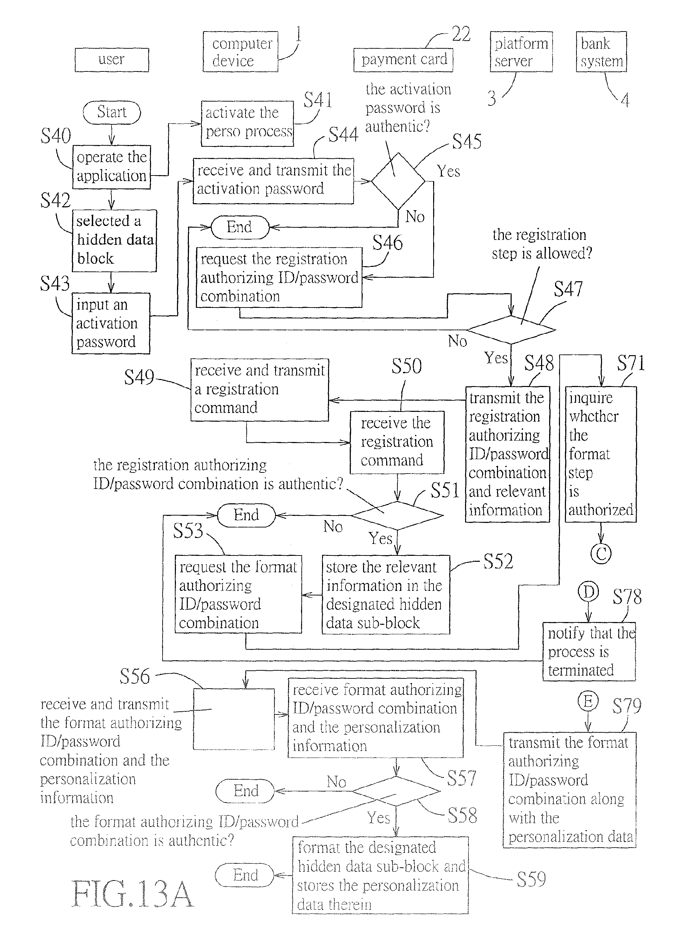

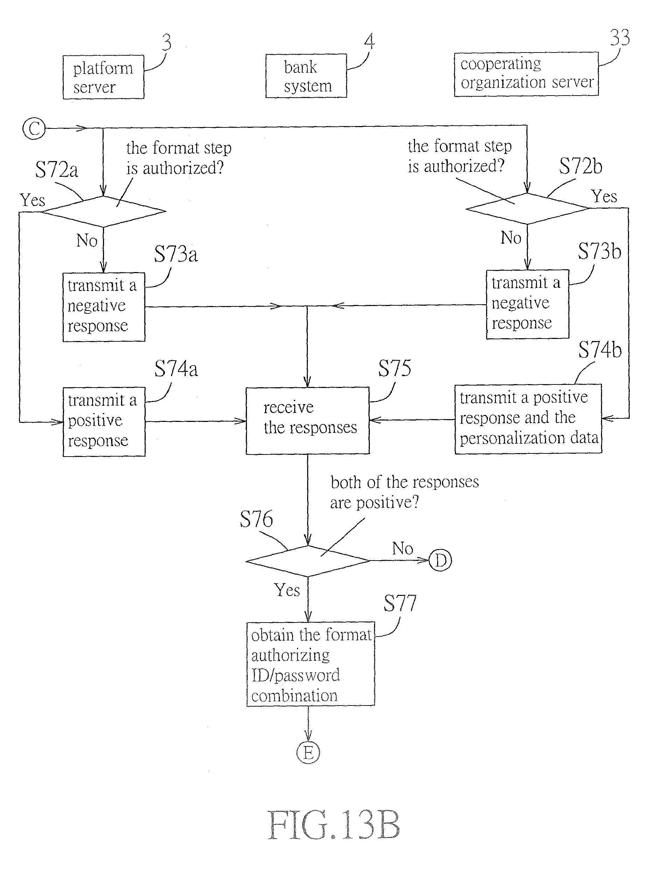

Figures 13A and 13B illustrate steps of the perso process using a third securing mechanism. In the example as shown in Figures 13A and 13B, the user may intend to input his/her account information of a bank into the payment card 22, and accordingly, one of the hidden data sub-blocks in the hidden data block 5G will be subjected to the perso process.

In this example, since the registration step (i.e., steps S41 to S52) is executed in a manner similar to that using the first and second securing mechanisms, so details thereof are omitted herein for the sake of brevity.

The main differences between using the first securing mechanism and the third securing mechanism are as follows.

The format authorizing ID/password combination used in the format step is generated cooperatively by the platform server 3 and the cooperating organization server 33 (which, in this case, is a server operated by a third party other than the bank system 4).

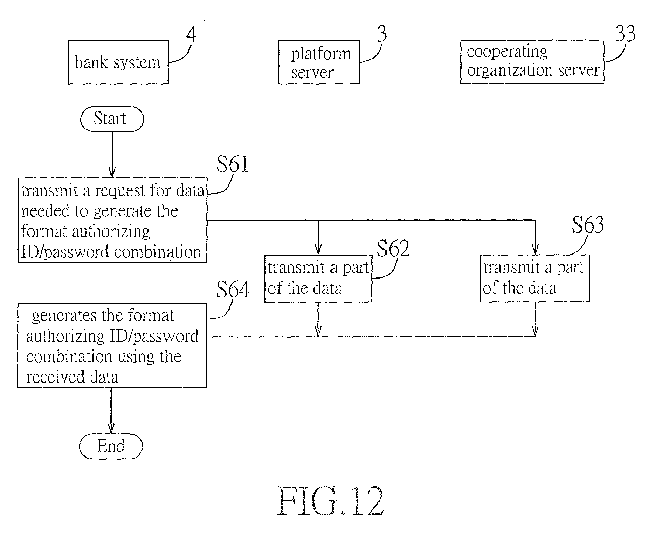

Generating format authorizing ID/password combination may be done using the steps depicted in Figure 12. In step S61, the bank system 4 transmits, to both the platform server 3 and the cooperating organization server 33, a request for data needed to generate the format authorizing ID/password combination. In response, the platform server 3 and the cooperating organization server 33 respectively, in steps S62 and S63, transmit a part of the data needed to generate the format authorizing ID/password combination back to the bank system 4. The bank system 4 then generates the format authorizing ID/password combination using the received data in step S64.

Afterwards, in the format step (as depicted in Figure 13A), in step S53, the computer device 1 requests the format authorizing ID/password combination from the bank system 4. Then, in step S71, the bank system 4 inquires, from the platform server 3 and the cooperating organization server 33, whether the format step is authorized.

In response (referring to Figure 13B), the platform server 3 and the cooperating organization server 33 respectively determine whether the format step is authorized in steps S72a and S72b. Specifically, for each of the platform server 3 and the cooperating organization server 33, when it is determined that the format step is not authorized, a negative response is transmitted to the bank system 4 (steps S73a and S73b) . On the other hand, when it is determined that the format step is authorized, a positive response is transmitted to the bank system 4 (steps S74a and S74b) . It is noted that, when the cooperating organization server 33 determines that the format step is authorized, the personalization data is also transmitted to the bank system 4 in step S74b.

The bank system 4 receives the responses in step S75, determines whether both responses are positive in step S76, and proceeds to step S77 when both responses are positive. When at least one of the responses is negative, in step S78, the bank system 4 transmits a response back to the computer device 1 notifying that the process is terminated.

In step S77, the bank system 4 obtains the format authorizing ID/password combination generated in step S64, and transmits the format authorizing ID/password combination along with the personalization data to the computer device 1 in step S79. Afterward, the computer device 1 continues the perso process as described hereinbefore.

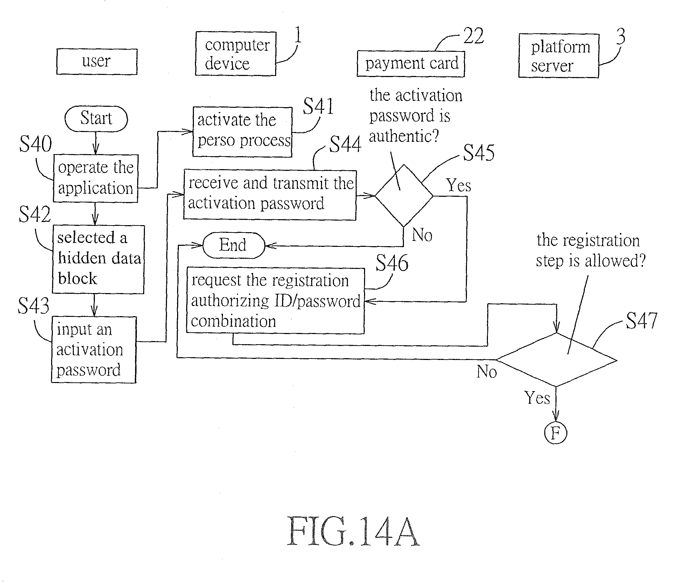

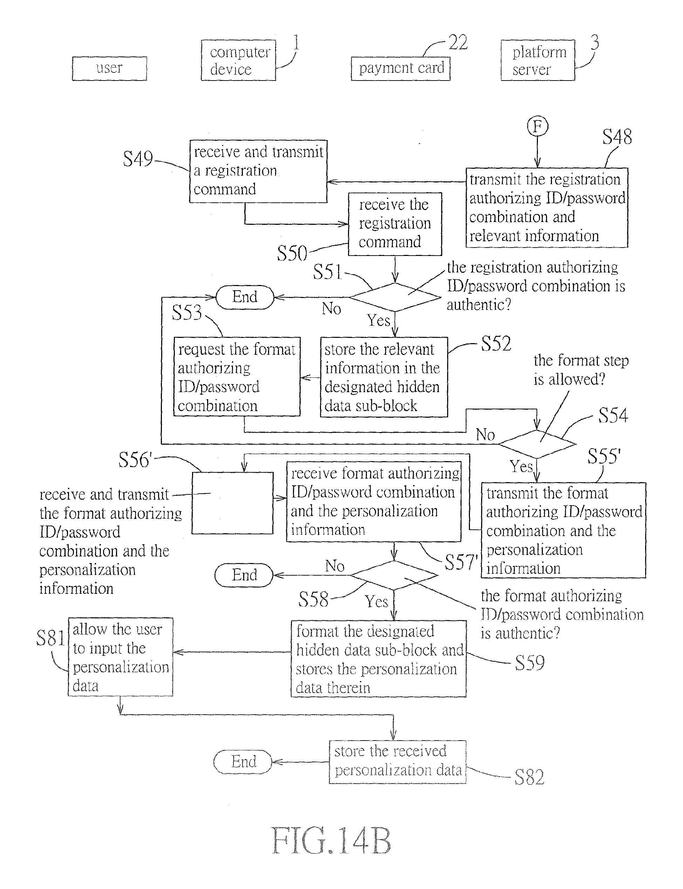

Figure 14 illustrates steps of the perso process using a fourth securing mechanism. In the example as shown in Figure 14, the user may intend to input his/her first aid information into the payment card 22, and accordingly, one of the hidden data sub-blocks in the hidden data block 5A will be subjected to the perso process.

In this example, since the registration step (i.e., steps S41 to S52) is executed in a manner similar to that using the first securing mechanism, details thereof are omitted herein for the sake of brevity.

The main differences between using the first securing mechanism and the fourth securing mechanism are described as follows. In step S53, the computer device 1 does not request for the personalization data from the platform server 3. Instead, after the payment card 22 is formatted in step S59, the computer device 1 allows the user to input the first aid information in step S81. Then, the computer device 1 stores the first aid information (used as the personalization data) in the designated hidden data sub-block of the hidden data block 5A in step S82.

It is noted that, in the cases that the personalization data is received from the platform server 3, the received personalization data may further include an access code for subsequent access of the designated hidden data sub-block (5A) . In the cases that the personalization data is inputted by the user, the access code is determined by the user as well. As such, after the perso process is completed, the hidden data sub-blocks will be assigned with a specific access level based on the securing mechanism used.

For example, anyone in possession of the payment card 22 may be authorized to read the hidden data sub-blocks of the hidden data block 5A , but only the user is authorized to write into the same.

The user is authorized to read the hidden data sub-blocks of the hidden data blocks 5B and 5F, but only the authorized organization (a hospital or a social organization) is authorized to write into the same.

The user is authorized to read and write into the hidden data sub-blocks of the hidden data blocks 5C to 5E.

The user is authorized to read the hidden data sub-blocks of the hidden data block 5G, but only the cooperating organization (a bank) is authorized to write into the same.

Anyone in possession of the payment card 22 may be authorized to read the hidden data sub-blocks of the hidden data block 5H, but only the platform server 3 can write into the same.

To sum up, the method of the present invention does not require a merchant to provide specific processing equipments for use with the conventional credit cards. Since the portable payment device 2 is embodied using a plug-and-play device, an arbitrary electronic device having the first connecting interface 13 and installed with the transaction application 120 can be employed as the electronic device 1. As a result, the method is beneficial for expanding usage of the payment card 22 in cases where the conventional credit card is not applicable. Furthermore, the hidden area 228 of the payment card 22 may be partitioned into a plurality of hidden data blocks each associated with a storage security level Each of the hidden data blocks is further partitioned into a plurality of hidden data sub-blocks, each requiring a personalization process to be activated. As a result, the hidden area 228 may be considered as an expanded information bank with enhanced security.

## Claims

1. A method for processing a payment, to be implemented using an electronic device (1) that is removably connected to a portable payment device (2) and that communicates with a banking server (5), the portable payment device (2) being a plug-and-play device and being provided with a payment card (22), said method being **characterized by** the following steps of:
(a) receiving, by the electronic device (1), transaction information related to a transaction and to a payment for the transaction;
(b) accessing, by the electronic device (1), the payment card (22) via the portable payment device (2);
(c) cooperating, by the electronic device (1), with the payment card (22) to generate a payment command to include at least the transaction information;
(d) establishing, by the electronic device (1), a session with the banking server (5), the session providing a secure communication channel between the electronic device (1) and the banking server (5);
(e) transmitting, by the electronic device (1), the payment command to the banking server (5) under the session established in step (d), the banking server (5) being configured to identify validity of the payment card (22) based on the payment command in response to receipt of the payment command and to process the payment according to the transaction information included in the payment command after identifying the payment card (22) as valid; and
(f) receiving, by the electronic device (1), a payment result from the banking server (5) under the session established in step (d), the payment result being generated by the banking server (5) after completing the payment.

2. The method of Claim 1, **characterized in that** step (d) includes the following sub-steps of:
(d1) obtaining, by the electronic device (1), a virtual account from the payment card (22), the virtual account being associated with a bank account that is between a user of the portable payment device (2) and a bank that operates the banking server (5) and that is used for the payment;
(d2) transmitting, by the electronic device (1), a session request to the banking server (5), the session request including the virtual account;
(d3) by the banking server (5), generating a session identification (ID) in response to receipt of the session request and transmitting the session ID to the electronic device (1);
(d4) transmitting, by the electronic device (1), the session ID to the payment card (22), the payment card (22) being configured to generate a first authentication code based on the session ID and a card identification key stored in the payment card (22) and to transmit the first authentication code to the electronic device (1);
(d5) transmitting, by the electronic device (1), the first authentication code to the banking server (5);
(d6) finding, by the banking server (5), a user identification key stored therein according to the virtual account included in the session request that is received from the electronic device (1) in sub-step (d2), the user identification key corresponding to the card identification key and being dedicated to the virtual account;
(d7) generating, by the banking server (5), a second authentication code based on the session ID generated in sub-step (d3) and the user identification key found in sub-step (d6);
(d8) determining, by the banking server (5), whether the first authentication code received from the electronic device (1) in sub-step (d5) conforms with the second authentication code generated in sub-step (d7); and
(d9) transmitting, by the banking server (5), a session response to the electronic device (1) so as to establish the session when it is determined in sub-step (d8) that the first authentication code conforms with the second authentication code.

3. The method of any one of Claims 1 and 2, **characterized in that** step (c) includes the following sub-steps of:
(c1) transmitting, by the electronic device (1), to-be-authenticated data to the payment card (22), the to-be-authenticated data including the transaction information, the payment card (22) being configured to generate a transaction authentication code (TAC) based on the to-be-authenticated data and to transmit the TAC to the electronic device (1); and
(c2) composing, by the electronic device (1), the payment command using the TAC.

4. The method of Claim 3, **characterized in that** the payment card (22) is configured to generate the TAC with a secret key stored in the payment card (22), and in step (e), the banking server (5) identifies validity of the payment card (22) by:
generating a confirmation code using the to-be-authenticated data included in the payment command using the same secret key, and;
comparing the TAC and the confirmation code.

5. The method of any one of Claims 1 to 4, **characterized in that** step (b) includes the following steps of:
(b1) when the portable payment device (2) is connected to the electronic device (1), determining, by the electronic device (1), whether the payment card (22) is detected;
(b2) in response to the determination that the payment card (22) is detected, outputting, by the electronic device (1), an instruction to ask user input of an access password;
(b3) upon receipt of the access password, transmitting, by the electronic device (1) the access password to the payment card (22), the payment card (22) being configured to verify the access password and to transmit an access-grant instruction to the electronic device (1) when the access password is correct; and
(b4) upon receipt of the access-grant instruction, clearing, by the electronic device (1), the access password temporarily stored therein.

6. The method of any one of Claims 1 to 5, further **characterized by**, after step (a), the step of disabling adjustment made on the transaction information.

7. A system (100) including:
an electronic device (1) that includes
a processor (11),
a memory unit (12) coupled to said processor (11) and storing a transaction application (120) therein,
a first connecting interface (13) coupled to said processor (11), and
a communication unit (15) coupled to said processor (11) and configured to communicate with a banking server (5); and
a portable payment device (2) that is a plug-and-play device, that is removably connected to said electronic device (1), and that includes
a card slot (201) provided with a card interface for containing a payment card (22) therein, and
a second connecting interface (23) to be electrically connected to said first connecting interface (13) of said electronic device (1), thereby enabling access to the payment card (22) using said electronic device (1);
**characterized in that** said transaction application (120), when executed by said processor (11), causes said electronic device (1) to cooperate with the payment card (22) and the banking server (5) to execute a method of Claim 1.

8. The system (100) of Claim 7, **characterized in that** said electronic device (1) is an automated teller machine (ATM), and further includes an input/output (I/O) unit (14) including at least a cash dispensing equipment.

9. The system (100) of Claim 7, **characterized in that** said electronic device (1) is a vending machine, and further includes an input/output (I/O) unit (14) including at least a plurality of physical/virtual buttons, and an item dispenser.

10. An electronic device (1) including:
a processor (11);
a memory unit (12) coupled to said processor (11) and storing a transaction application (120) therein;
a first connecting interface (13) coupled to said processor (11) and that is for removably coupling to a portable payment device (2) provided with a payment card (22); and
a communication unit (15) that is coupled to said processor (11) and that is configured to communicate with a banking server (5);
**characterized in that**, said transaction application (120), when executed by said processor (11), causes said electronic device (1) to cooperate with the payment card (22) and the banking server (5) to execute a method of Claim 1.

11. The electronic device (1) of Claim 10, which is an automated teller machine (ATM), and is further **characterized by** an input/output (I/O) unit (14) including at least a cash dispensing equipment.

12. The electronic device (1) of Claim 10, which is a vending machine, and is further **characterized by** an input/output (I/O) unit (14) including at least a plurality of physical/virtual buttons, and an item dispenser.

13. A payment card (22) to be coupled to an electronic device (1) that executes an application (120) to perform a personalization process for the payment card (22), said payment card (22) including:
a control module (220) including a controller chip (222), a controller firmware (224) and an application program interface (API) (223); and
a storage unit (225) including a hidden area (228) that is only accessible to the application (120) via the controller firmware (224) and the API (223) after a certain authorization sequence has been done;
**characterized in that**
said hidden area (228) is partitioned into a plurality of hidden data blocks (5A-5H), each of said hidden data blocks (5A-5H) being associated with a storage security level and being configured for storing a predetermined data type of personalization data, and
for each of the hidden data blocks (5A-5H), said controller chip (222) is configured to perform the personalization process for storing the personalization data with a predetermined one of a plurality of securing mechanisms that corresponds to the storage security level of the hidden data block.

14. The payment card (22) of Claim 13, **characterized in that** the personalization process includes:
a registration step, in which one of the hidden data blocks (5A-5H) is selected to be used for storing the personalization data;
a format step, in which the designated one of the hidden data blocks (5A-5H) is formatted to conform with the predetermined data type so as to allow the personalization data to be stored therein; and
a personalization step, in which said payment card (22) stores the personalization data in the designated one of the hidden data blocks (5A-5H).

15. The payment card (22) of Claim 14, **characterized in that**:
each of the hidden data blocks (5A-5H) is partitioned into a plurality of hidden data sub-blocks, in the registration step, said payment card (22) further designates one of the hidden data sub-blocks in the designated one of the hidden data blocks (5A-5H) to be used for storing the personalization data, and in the format step, the designated one of the hidden data sub-blocks is formatted;
each of the hidden data sub-blocks is stored with a preset registration ID/password combination for authorizing the registration step and a preset format ID/password combination for authorizing the format step;
said payment card (22) receives a registration authorizing ID/password combination, and executes the registration step only when the registration authorizing ID/password combination conforms with the preset registration ID/password combination; and
said payment card (22) receives a format authorizing ID/password combination, and executes the format step only when the format authorizing ID/password combination conforms with the preset format ID/password combination.

16. The payment card (22) of Claim 15, **characterized in that**:
said payment card (22) is configured to perform the personalization process according to one of first to fourth securing mechanisms;
in the first securing mechanism, the registration authorizing ID/password combination, the format authorizing ID/password combination and the personalization data are received from a platform server (3) ;
in the second securing mechanism, the registration authorizing ID/password combination and the personalization data are received from the platform server (3), and the format authorizing ID/password combination is received from an authorized organization server (32) that is authorized by the platform server (3) to provide the format authorizing ID/password combination;
in the third securing mechanism, the registration authorizing ID/password combination and the personalization data are received from the platform server (3), the format authorizing ID/password combination is received from a third party, and the format authorizing ID/password combination is generated cooperatively by the platform server (3) and a cooperating organization server (33); and
in the fourth securing mechanism, the registration authorizing ID/password combination and the format authorizing ID/password combination are received from a platform server (3), and the personalization data is received from the application (120) via the controller firmware (224) and the API (223).

17. The payment card (22) of Claim 14, **characterized in that**:
the registration step includes the sub-steps of
in response to receipt of a registration command, designating a hidden data sub-block that is partitioned from the one of the hidden data blocks (5A-5H), and
receiving a format authorizing ID/password combination from a first party that operates under one of the securing mechanisms of the designated one of the hidden data blocks (5A-5H);
in the format step, when it is determined that the received format authorizing ID/password combination conforms with a preset format ID/password combination stored in the designated hidden data sub-block, formatting the designated hidden data sub-block; and
in the personalization step, storing the personalization data in the designated hidden data sub-block.
